# EUROPÄISCHE PATENTSCHRIFT

(11) **EP 1 050 429 B1**
(45) Veröffentlichungstag und Bekanntmachung des Hinweises auf die Patenterteilung: **19.10.2005**
(21) Anmeldenummer: 00106430.2
(22) Anmeldetag: 24.03.2000
(51) Int. Cl.: B60N 2/56, A47C 7/74

(54) **Fahrzeugsitz**
Vehicle seat
Siège de véhicule

(30) Priorität: 03.05.1999 DE 19920062
(43) Veröffentlichungstag der Anmeldung: 08.11.2000
(73) Patentinhaber: DaimlerChrysler AG, 70567 Stuttgart (DE)
(72) Erfinder: Decker, Harald, 72202 Nagold (DE); Orizaris, Vasilios, 71272 Renningen (DE); Pfahler, Karl, Dr., 70180 Stuttgart (DE)

(56) Entgegenhaltungen:
- WO-A-97/09908
- DE-C- 19 628 698
- US-A- 5 403 065
- PATENT ABSTRACTS OF JAPAN vol. 013, no. 006 (M-781), 9. Januar 1989 (1989-01-09) -& JP 63 219418 A (NISSAN MOTOR CO LTD), 13. September 1988 (1988-09-13)

## Beschreibung

Die Erfindung betrifft einen Fahrzeugsitz gemäß dem Oberbegriff des Patentanspruchs 1. Ein derartiger Sitz ist z.B. aus der WO 97/09908 A bekannt.

Solche belüfteten Fahrzeugsitze dienen der Verbesserung des Sitzklimakomforts sowohl beim Einsteigen in ein geparktes, durch längere Sonneneinstrahlung überhitztes Fahrzeug, als auch über längere Fahrzeiten hinweg.

Bei einem Fahrzeugsitz dieser Art (DE 196 28 698 C1) überzieht die aus einem grobmaschigen Abstandsgewirk bestehende luftdurchflutbare Polsterschicht, die sog. Ventilationsschicht, ganzflächig eine Polsterauflage aus Gummihaar oder Schaumstoff, die auf einem Polsterträger, z.B. einem Federkern, aufliegt, und ist auf ihrer von der Polsterauflage abgekehrten Ober- oder Vorderseite von einer luftdurchlässigen Druckverteilungsschicht aus einem Abstandsgewirk, Vlies oder offenporigen Schaum überzogen. Die Druckverteilungsschicht ist von einem Pölsterbezug überspannt, und zwischen Polsterbezug und Druckverteilungsschicht ist eine Bezugsfüllung eingearbeitet. Zur Belüftung der Ventilationsschicht ist eine Vielzahl von elektrisch angetriebenen Miniaturlüftern oder Miniaturventilatoren vorgesehen, die in in die Polsterauflage eingearbeiteten Luftkanälen eingesetzt und am Polster befestigt sind. Diese Luftkanäle sind über die Polsterfläche verteilt angeordnet. In einem begrenzten Bereich oberhalb der Luftkanalmündungen ist jeweils auf der von der Luftkanalmündung abgekehrten Oberseite der Ventilationsschicht eine luftundurchlässige Zwischenlage, z.B. eine Folie, angeordnet, so daß hier die über den Luftkanal in die Ventilationsschicht eingeblasene Luft nicht sofort durch die Druckverteilungsschicht und dem Polsterbezug austritt, sondern umgelenkt wird und die Ventilationsschicht durchströmt. Die Miniaturlüfter saugen aus dem unterhalb des Sitzteils befindlichen Bereich des Fahrgastraums Luft an und blasen diese in die Ventilationsschicht. In der Ventilationsschicht kann sich die Luft in allen Richtungen ausbreiten und strömt bei unbesetztem Sitz durch die Druckverteilungsschicht und den Polsterbezug hindurch in den Luftraum oberhalb der Sitzoberfläche, wodurch eine rasche Abkühlung der z.B. durch Sonneneinstrahlung aufgeheizten Sitzfläche bewirkt wird. Bei besetztem Sitz strömt die Luft in der Ventilationsschicht entlang und tritt an den offenen Enden der Ventilationsschicht wieder aus. Sie erzeugt dabei einen Temperatur- und Luftfeuchtigkeitsgradienten und führt die vom Sitzenden angefeuchtete Luft ab.

Eine solche Polstergestaltung zur aktiven Sitzbelüftung ist fertigungstechnisch sehr aufwendig und wird daher nur bei Fahrzeugsitzen für Fahrzeuge der oberen Preisklasse eingesetzt. Die in den Luftkanälen eingebetteten Lüfter oder Ventilatoren können unter bestimmten Bedingungen, z.B. bei einem vereinfachten Polsteraufbau, bei Sitzbelastung Scherkräften ausgesetzt sein, so daß im eingesessenen Zustand des Polsters die Lüfterräder am Lüftergehäuse reiben und so Geräusche verursachen. Die Montage der Lüfter ist schwierig und bei Defekt muß das Polster ausgetauscht werden.

Der Erfindung liegt die Aufgabe zugrunde, bei einem Fahrzeugsitz der eingangs genannten Art eine kostengünstige Lösung für die Sitzbelüftung zu schaffen, die geringe Montagekosten erfordert und auch bei vereinfachtem Polsteraufbau eine erhöhte Geräuschentwicklung bei Sitzbelastung unter allen Umständen langfristig ausschließt.

Die Aufgabe ist erfindungsgemäß durch die Merkmale des Patentanspruchs 1 gelöst.

Der erfindungsgemäße Fahrzeugsitz hat den Vorteil, daß durch die konstruktive Gestaltung der mindestens eine Ventilator oder Lüfter kräftefrei und raumfest festliegt und unabhängig von der Sitzbelastung eine stabile Lage einnimmt. Über das eingesessene Polster können zu keinem Zeitpunkt Kräfte auf den Ventilator übertragen werden, so daß keine Gehäuseverformung am Ventilator und damit kein Schleifen des rotierenden Ventilatorrads am Gehäuse zu befürchten ist. Die Montage des Ventilators ist einfach und bei Defekt kann er mit wenig zusätzlichem Aufwand ausgetauscht werden.

Vorteilhafte Ausführungsformen des erfindungsgemäßen Fahrzeugsitzes mit zweckmäßigen Weiterbildungen und Ausgestaltungen der Erfindung sind in den weiteren Patentansprüchen angegeben.

Die Erfindung ist anhand von in der Zeichnung dargestellten Ausführungsbeispielen im folgenden näher beschrieben. Es zeigen jeweils in schematischer Darstellung:
- Fig. 1: einen Längsschnitt eines Sitzteils eines Fahrzeugsitzes,
- Fig. 2: einen Längsschnitt einer Rückenlehne des Fahrzeugsitzes.

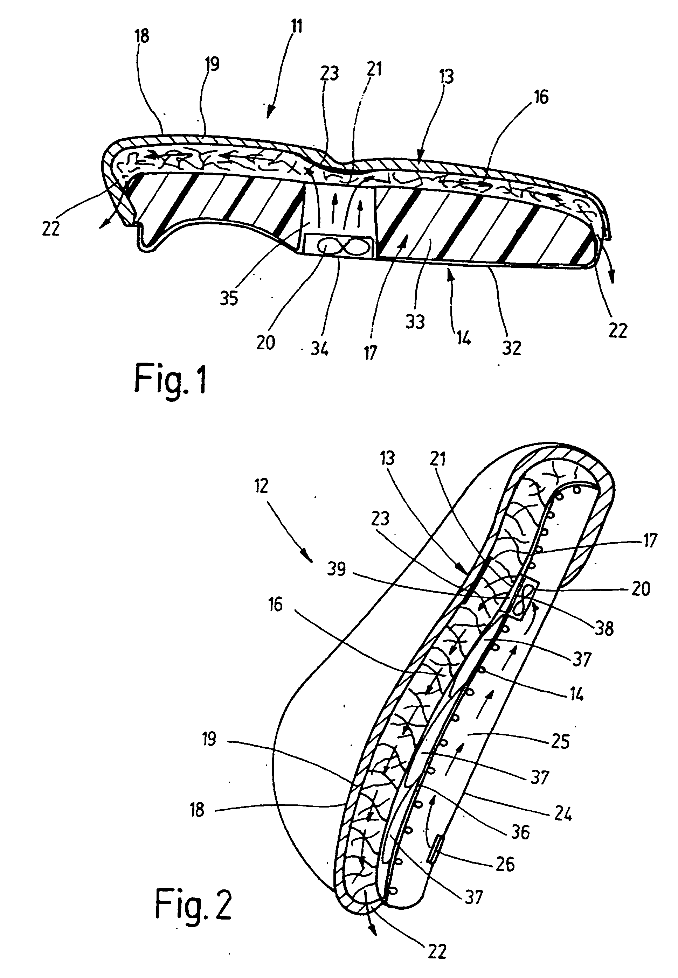

Ein Fahrzeugsitz weist in bekannter Weise ein am Fahrzeugboden verstellbar gehaltenes Sitzteil 11 und eine Rückenlehne 12 auf, die zur Neigungseinstellung über eine Schwenkrasterung mit dem Sitzteil 11 verbunden ist. Das in Fig. 1 schematisch im Längsschnitt dargestellte Sitzteil 11 und die in Fig. 2 schematisch im Längsschnitt skizzierte Rückenlehne 12 besitzen jeweils ein Polster 13, das auf einem Polsterträger 14 befestigt ist. Der Polsterträger 14 im Sitzteil 11 ist als Sitzschale 32 ausgeführt und in der Rückenlehne 12 als ein Federkern aus Federdraht ausgebildet, der in einem nicht dargestellten Rahmen befestigt ist. Das für Sitzteil 11 und Rückenlehne 12 in gleicher Weise aufgebaute Polster 13 umfaßt eine luftdurchflutbare Ventilationsschicht 16 aus grob strukturiertem Vliesmaterial, z.B. Gummihaar, oder aus einem Abstandsgewirk, und eine luftundurchlässige Polsterschicht, hier Druckverteilungsschicht 17, die auf dem Polsterträger 14 aufliegt und die Ventilationsschicht 16 auf deren Unterseite im Sitzeil 11 bzw. auf deren Rückseite in der Rückenlehne 12 vollständig überdeckt. Die von der Druckverteilungsschicht 17 abgekehrte Ober- oder Vorderseite des Polsters 13 ist mit einem luftdurchlässigen Polsterbezug 18 aus Textilstoff oder perforiertem Leder oder Kunststoff überzogen, und zwischen Ventilationsschicht 16 und Polsterbezug 18 ist eine Bezugsfüllung 19 aus Polsterwatte, Wollvlies oder einem offenporigen oder zumindest teilweise perforierten Schaumstoff oder aus einer Watte-Schaum-Kombination eingearbeitet. Im Falle einer elektrischen Sitzheizung sind - wie hier nicht weiter dargestellt - deren Heizdrähte in der Bezugsfüllung 19 eingebettet.

Die Ventilationsschicht 16 ist mittels eines elektrisch angetriebenen Lüfters oder Ventilators 20 mit Luft durchflutbar. Zur Schaffung eines Luftströmungsweges mit geringem Strömungswiderstand ist die Ventilationsschicht 16 mit einer Einströmöffnung 21 und einer Ausströmöffnung 22 versehen, die in Längsrichtung des Sitzteils 11 bzw. der Rückenlehne 12 gesehen, im größtmöglichen Abstand voneinander angeordnet sind. Im Bereich der Lufteinströmöffnung 21 ist die Ventilationsschicht 16 auf ihrer von der Druckverteilungsschicht 17 abgekehrten Oberseite mit einer luftundurchlässigen Sperrschicht 23, z.B. einer Folie abgedeckt, so daß die über die Lufteinströmöffnung 21 einströmende Luft an dieser Stelle nicht unmittelbar über den luftdurchlässigen Polsterbezug 18 austreten kann, sondern umgelenkt wird und die Ventilationsschicht 16 in Längsrichtung durchströmt. Wie hier nicht weiter dargestellt ist, kann zusätzlich noch die Sperrschicht 23 über den unmittelbaren Bereich der Lufteintrittsöffnung 21 hinaus weitergeführt und hier mindestens teilweise perforiert sein, so daß verschiedene Polsterbereiche mit unterschiedlicher Intensität belüftet werden.

Bei dem in Fig. 1 dargestellten Sitzteil 11 des Fahrzeugsitzes mit als Sitzschale 32 ausgebildetem Polsterträger 14 ist die luftundurchlässige Druckverteilungsschicht 17 als dichtes Schaumpolster 33 ausgeführt, das sich unmittelbar auf der Sitzschale 32 abstützt. Die Sitzschale 32 weist eine Öffnung 34 auf, und in dem Schaumpolster 33 ist ein Luftkanal 35 ausgebildet, der sich von der Öffnung 34 in der Sitzschale 32 bis zur Lufteintrittsöffnung 21 der Ventilationsschicht 16 erstreckt. Der Ventilator 20 ist in den Luftkanal 35 eingesetzt und auf der zum Schaumpolster 33 weisenden Innenseite der Sitzschale 32 befestigt. Der lichte Durchmesser des Luftkanals 35 ist dabei wesentlich größer als der Außendurchmesser des Ventilators 20 bemessen, so daß im eingesessenen Zustand des Sitzteils 11 das Schaumpolster 33 zu keinem Zeitpunkt den Ventilator 20 berührt und damit keine Scherkräfte von dem Schaumpolster 33 auf den Ventilator 20 übertragen werden. Die Aufnahme des Ventilators 20 auf der Innenseite der Sitzschale 32 ist so beschaffen, daß eine Vibrationsdämpfung erfolgt. Durch diese konstruktive Gestaltung sitzt der Ventilator 20 in einer stabilen Lage kräftefrei auf der Sitzschale 32 und ist einfach und kostengünstig zu montieren.

Im Ausführungsbeispiel der Rückenlehne 12 gemäß Fig. 2 ist die Lufteinströmöffnung 21 im oberen und die Luftausströmöffnung 22 im unteren Bereich des Polsters 13 vorgesehen, so daß die Ventilationsschicht 16 von oben nach unten durchströmt wird. Wie allgemein üblich, ist auch hier die Rückenlehne 12 auf ihrer vom Polsterbezug 18 abgekehrten Rückseite mit einer Lehnenverkleidung 24 abgedeckt, wobei zwischen dem Polsterträger 14 und der rückwärtigen Lehnenverkleidung 24 ein Hohlraum 25 verbleibt. Der Polsterbezug 18 ist dabei über die Oberkante der Rückenlehne 12 hinweg bis in den oberen Teil der Rückseite der Rückenlehne 12 gezogen und wird dort von der Lehnenverkleidung 24 gespannt gehalten, die ihrerseits an der Unterseite der Rückenlehne 12 am Lehnenrahmen festgelegt ist. Nahe der Unterseite der Rückenlehne 12 ist in der Lehnenverkleidung 24 eine Lufteintrittsöffnung 26 ausgebildet. Zwischen dem als Federkern aus Federdraht ausgebildeten Polsterträger 14 und dem Polster 13 liegt eine Verstärkungsplatte 36 zur Abstützung von Multikonturblasen 37 ein, die zur optimalen Rückenabstützung des Sitzenden im Spiegelbereich des Polsters 13 angeordnet sind. In der Verstärkungsplatte 36 ist außerhalb des Abstützbereichs der Multikonturblasen 37 eine mit der Lufteinströmöffnung 21 im Polster 13 kongruente Lüfteröffnung 38 vorgesehen, an der der Ventilator 20 angeordnet ist. Der Ventilator 20 ist dabei auf der vom Polster 13 abgekehrten Rückseite der Verstärkungsplatte 36 mittels Kunststoffschrauben befestigt. In der unmittelbar an der Verstärkungsplatte 36 anliegenden Druckverteilungsschicht 17 aus Vlies oder Gummihaar hoher Dichte ist ein von der Lüfteröffnung 38 bis zur Ventilationsschicht 16 sich erstreckender Luftkanal 39 ausgebildet, der so groß bemessen ist, daß bei eingesessenem Fahrzeugsitz vom Polstermaterial keine Druck- und Scherkräfte auf den Ventilator 20 übertragen werden können.

Die vom Ventilator 20 über die Lufteintrittsöffnung 26 und den Hohlraum 25 angesaugte Luft gelangt über die Lüfteröffnung 38, den Luftkanal 39 und die Lufteinströmöffnung 21 in die Ventilationsschicht 16, durchströmt die Ventilationsschicht 16 von oben nach unten und tritt über die Luftausströmöffnung 22 wieder in den Fahrgastraum aus. Innerhalb der Ventilationsschicht 16 streicht die Luft parallel zur Rückenlehnenvorderseite - ebenso wie an der Sitzoberfläche des Sitzteils 11 - unter dem Polsterbezug 18 entlang und erzeugt dabei einen Luftfeuchtigkeitsgradienten, so daß bei besetztem Fahrzeugsitz vom Sitzbenutzer angefeuchtete Luft abgeführt wird. Bei unbesetztem Sitz tritt die in der Ventilationsschicht 16 strömenden Luft auch durch den Polsterbezug 18 hindurch in den Luftraum vor der Rückenlehne 12 bzw. über der Sitzteiloberfläche und bewirkt dadurch eine rasche Abkühlung des z.B. durch Sonneneinstrahlung aufgeheizten Fahrzeugsitzes. Um diesen Effekt zu nutzen, ist es sinnvoll, den Einschaltvorgang der beiden Ventilatoren 20 im Sitzteil 11 und in der Rückenlehne 12 mit dem Entriegeln der Fahrzeugtüren durch eine Fernschließvorrichtung zu koppeln, so daß die Abkühlung des Fahrzeugsitzes schon vor Einsteigen in das Fahrzeug einsetzt. Dadurch, daß die Luft aus dem Bereich unterhalb des Fahrzeugsitzes angesaugt wird, wird der Kühleffekt verstärkt, da in einem beim Parken aufgeheizten Fahrzeug die Temperatur im Bereich unterhalb des Fahrzeugsitzes am niedrigsten ist.

## Patentansprüche

1. Fahrzeugsitz mit einem in einem Sitzteil (11) und/oder in einer Rückenlehne (12) integrierten, von einem Polsterträger (14) aufgenommenen Polster (13), das eine luftundurchlässige Polsterschicht, eine diese ganzflächig überziehende, luftdurchflutbare Ventilationsschicht (16) und einen die dem Sitzenden zugekehrte Polsteroberfläche überspannenden, luftdurchlässigen Polsterbezug (18) aufweist, und mit mindestens einem Ventilator (20), der Luft durch einen sich durch die Polsterschicht hindurch erstreckenden Luftkanal (35) in die Ventilationsschicht (16) einbläst, wobei
sich die Polsterschicht auf einer steifen Platte abstützt, die eine mit dem mindestens einen Luftkanal (35) kongruente Durchgangsöffnung (34) aufweist und wobei der mindestens eine Ventilator (20) koaxial zur Durchgangsöffnung (34) an der Platte befestigt ist,
**dadurch gekennzeichnet,**
**dass** der Ventilator (20) in den Luftkanal (35) eingesetzt ist und dass der Luftkanal (35) einen größeren Durchmesser als der Ventilator (20) aufweist, der so groß bemessen ist, dass vom Polstermaterial keine Druck- und Scherkräfte auf den Ventilator (20) übertragen werden, wobei der lichte Durchmesser des Luftkanals (35) so bemessen ist, daß im eingesessenen Zustand des Polsters (13) die Polsterschicht den Ventilator (20) zu keinem Zeitpunkt berührt.

2. Sitz nach Anspruch 1,
**dadurch gekennzeichnet,**
**dass** die Befestigung des Ventilators (20) an der Platte mittels Kunststoffschrauben vorgenommen ist.

3. Sitz nach einem der Ansprüche 1 - 2,
**dadurch gekennzeichnet,**
**dass** die steife Platte als Sitzschale (32) ausgebildet ist, die als im Sitzteil (11) angeordneter Polsterträger (14) die Polsterschicht unmittelbar aufnimmt.

4. Sitz nach einem der Ansprüche 1 - 3,
**dadurch gekennzeichnet,**
**dass** die luftundurchlässige Polsterschicht als Druckverteilungsschicht (17) aus festem Schaumstoff oder dichtem Gummihaar oder Vlies ausgebildet ist.

## Claims

1. Vehicle seat with a cushion (13), that is taken up by a cushion support (14) integrated into a seat section (11) and/or into a backrest (12), a cushion concerned having an air-permeable cushion layer, fully covering air-penetrable ventilation (16) and an air-penetrable cushion cover (18) that spans the cushion surface facing away from the sitting person, and with at least one ventilator (20) which blows air into the ventilation layer (16) through an air-channel (35) extending through the cushion layer, whereby the cushion layer is supported on a rigid plate which has a slot (34) that is congruent with the at least one air-channel (35) and whereby the at least one ventilator (20) is attached, coaxially in relation to the slot, to the plate,
**characterized in that**
the ventilator (20) is inserted into the air-channel (35) and **in that** the diameter of the air-channel (35) is greater than that of the ventilator (20), the diameter of the air-channel being such that no pressure or shearing forces are transmitted by the cushion material to the ventilator, whereby the clear diameter of the air-channel (35) is such that, when the cushion is being sat on, the cushioning layer at no point touches the ventilator (20).

2. Seat in accordance with claim 1,
**characterized in that**
the ventilator (20) is attached to the plate occurs by means of plastic screws or bolts.

3. Seat in accordance with one of the claims 1 or 2,
**characterized in that**
the rigid plate is developed as a seat shell (32) that directly takes up the cushion layer (14) as a cushion support (14) in the seat section (11).

4. Seat in accordance with one of claims 1 to 3,
**characterized in that**
the air-penetrable cushion layer is developed as a pressure-distributing layer (17) made of solid foam, dense rubber hair or fleece.

## Revendications

1. Siège de véhicule, avec un capiton (13) logé dans un support de capiton (14) intégré dans un élément du siège (11) et/ou dans un dossier (12), qui comporte une couche capitonnée imperméable à l'air, une couche de ventilation (16) pouvant être traversée par de l'air, recouvrant cette dernière sur toute sa surface et un revêtement capitonné perméable à l'air (18) tendu sur la surface capitonnée dirigée vers la personne assise et avec au moins un ventilateur (20) soufflant de l'air dans la couche de ventilation (16), par l'intermédiaire d'un conduit de ventilation (35) s'étendant à travers la couche capitonnée, la couche capitonnée s'appuyant sur un panneau rigide, qui comporte un orifice de passage (34) congruent avec au moins le conduit de ventilation (35) et au moins le ventilateur (20) étant fixé sur le plateau, de façon coaxiale à l'orifice de passage (34),
**caractérisé en ce que**
le ventilateur (20) est inséré dans le conduit de ventilation (35) et le conduit de ventilation (35) a un diamètre plus important que le ventilateur (20), qui est dimensionné de façon à ce qu'aucun effort de compression, ni aucun effort de cisaillement ne soit exercé sur le ventilateur (20) par le matériau de capitonnage, le diamètre libre du conduit de ventilation (35) étant dimensionné de façon à ce que lorsque le capiton (13) est en place, la couche capitonnée ne soit jamais en contact avec le ventilateur (20).

2. Siège selon la revendication 1,
**caractérisé en ce que** la fixation du ventilateur (20) sur le panneau est assurée à l'aide de vis en matière plastique.

3. Siège selon l'une quelconque des revendications 1 - 2,
**caractérisé en ce que** le panneau rigide est conçu sous la forme d'une coque de siège (32), qui en tant que support de capiton (14) disposé dans l'élément de siège (11) réceptionne directement la couche capitonnée.

4. Siège selon l'une quelconque des revendications 1 à 3,
**caractérisé en ce que** la couche capitonnée imperméable à l'air est conçue en tant que couche de répartition de la pression (17) en mousse rigide ou en poil en caoutchouc dense ou en non-tissé.
